Europäisches Patentamt

European Patent Office

Office européen des brevets

(11) Veröffentlichungsnummer: **0 530 695 A2**

# EUROPÄISCHE PATENTANMELDUNG

(21) Anmeldenummer: **92114710.4**

(22) Anmeldetag: **28.08.92**

(51) Int. Cl.$^5$: **C08L 71/12**, C08L 25/06, C08L 25/16

(30) Priorität: **06.09.91 DE 4129767**

(43) Veröffentlichungstag der Anmeldung:
**10.03.93 Patentblatt 93/10**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Klaerner, Peter, Dr.**
**Hauptstrasse 62**
**W-6719 Battenberg(DE)**
Erfinder: **Blumenstein, Uwe, Dr.**
**Ganderhofstrasse 2**
**W-6700 Ludwigshafen(DE)**
Erfinder: **Seelert, Stefan, Dr.**
**Albrecht-Duerer-Ring 23a**
**W-6710 Frankenthal(DE)**
Erfinder: **Bender, Dietmar, Dr.**
**Sebastian-Kneipp-Strasse 19**
**W-6707 Schifferstadt(DE)**
Erfinder: **Jung, Andreas, Dr.**
**R 4.3**
**W-6800 Mannheim 1(DE)**
Erfinder: **Zeltner, Doris, Dr.**
**Viehtrifstrasse 94**
**W-6725 Roemerberg(DE)**

(54) **Thermoplastische Formassen auf Basis von Polyphenylenethern und Polystyrol.**

(57) Thermoplastische Formmassen auf Basis von Polyphenylenethern und Polystyrol, enthaltend als wesentliche Komponenten

A) 5 bis 95 Gew.-% mindestens eines Polyphenylenethers und

B) 5 bis 95 Gew.-% einer polymeren Masse bestehend aus

b1) 50 bis 99 Gew.-% mindestens eines, gegebenenfalls modifizierten, vinylaromatischen Polymerisats und
b2) 1 bis 50 Gew.-% mindestens eines, gegebenenfalls modifizierten, vinylaromatischen Polymerisats mit einer Molekulargewichtsverteilungsbreite (Mw/Mn) von 1,2 oder kleiner und einem Zahlenmittel des Molekulargewichts (Mn) im Bereich von 30 000 bis 80 000, wobei das Zahlenmittel des Molekulargewichts (Mn) von b1) größer ist als das von b2).

Die thermoplastischen Formmassen besitzen, verglichen mit herkömmlichen Polyphenylenether/Polystyrol-Blends, verbesserte Verarbeitungseigenschaften bei gleichwertigen mechanischen Eigenschaften und gleich großer Wärmeformbeständigkeit.

EP 0 530 695 A2

Die vorliegende Erfindung betrifft thermoplastische Formmassen auf Basis von Polyphenylenethern und Polystyrol, enthaltend als wesentliche Komponenten

A) 5 bis 95 Gew.-% mindestens eines Polyphenylenethers und

B) 5 bis 95 Gew.-% einer polymeren Masse bestehend aus

b1) 50 bis 99 Gew.-% mindestens eines, gegebenenfalls modifizierten, Polystyrols und/oder alkylsubstituierten Polystyrols und

b2) 1 bis 50 Gew.-% mindestens eines, gegebenenfalls modifizierten, Polystyrols und/oder alkylsubstituierten polystyrols mit einer Molekulargewichtsverteilungsbreite (Mw/Mn) von 1,2 oder kleiner und einem Zahlenmittel des Molekulargewichts (Mn) im Bereich von 30 000 bis 80 000, wobei das Zahlenmittel des Molekulargewichts (Mn) von b1) größer ist als das von b2).

Darüber hinaus betrifft die vorliegende Erfindung die Verwendung derartiger Formmassen zur Herstellung von Fasern, Folien und Formkörpern sowie entsprechende Formkörper selbst.

Thermoplastische Formmassen, die sich zur Herstellung von Formteilen eignen und die, gegebenenfalls schlägzäh modifizierte, Styrolpolymerisate und Polyphenylenether enthalten, sind aus den Patentschriften US 3 383 435 und US 4 128 602 sowie der deutschen Offenlegungsschrift 2 211 005 bekannt.

In der Patentschrift US 4 885 339 werden polymere Mischungen aus einem Arylenether und anionisch polymerisierten Vinylaromaten genannt. Dabei haben die anionisch polymerisierten Vinylaromaten ein Gewichtsmittel des Molekulargewichts von wenigstens 50 000 und eine Molekulargewichtsverteilungsbreite von kleiner 1,8. Blends dieser Art verfügen zwar über ein gutes Fließvermögen, haben aber ungenügende mechanische Eigenschaften.

Solche Formmassen eignen sich zur Herstellung von Formteilen, die sich im Vergleich zu Teilen aus schlagzäh modifizierten Styrolpolymerisaten, die nicht mit Polyphenylenethern abgemischt wurden, durch eine bessere Wärmeformbeständigkeit auszeichnen.

Die Materialeigenschaften derartiger Formmassen sind im allgemeinen zufriedenstellend, doch hat es sich gezeigt, daß insbesondere die Fließfähigkeit der Massen, die wichtig für kurze Entformzeiten im Spritzgußbereich ist, noch unbefriedigend ist.

Gewöhnlich werden dem Polystyrol zur Verbesserung der Fließfähigkeit Mineralöle bzw. Weißöle zugegeben. Nachteilig ist, daß diese Schmiermittel die Wärmeformbeständigkeit herabsetzen und beim Verarbeiten des Polystyrols ausschwitzen.

In der europäischen Offenlegungsschrift 316 621 werden Mischungen aus Polyphenylenethern, schlagzäh modifiziertem Polystyrol und einem Styrol/$\alpha$-Methylstyrol-Copolymer beschrieben. Zwar verbessert sich durch den Zusatz des Copolymeren die Fließfähigkeit, doch gehen Wärmeformbeständigkeit, Steifigkeit und Schlagzähigkeit zurück.

Aufgabe der vorliegenden Erfindung war es daher, die Verarbeitungseigenschaften, insbesondere die Fließfähigkeit, von Polyphenylenether/Polystyrol-Blends zu verbessern, ohne die mechanischen Eigenschaften, insbesondere die Wärmeformbeständigkeit, herabzusetzen. Auch sollten keine Additive verwendet werden, die bei der Verarbeitung der Thermoplasten auschwitzen können.

Demgemäß wurden die eingangs definierten thermoplastischen Formmassen gefunden.

Im einzelnen haben die Komponenten der erfindungsgemäßen Formmassen die folgende Bedeutung:

Komponente A:

Die in Betracht kommenden Polyphenylenether (PPE) sind bekannt. Sie werden aus Phenol, das vorzugsweise in ortho-Stellung ein- oder zweifach durch Alkyl-, Alkoxy- oder Halogengruppen substituiert ist, z.B. durch oxidative Kupplung hergestellt (vgl. US-A 3 661 848, 3 378 505, 3 306 874, 3 306 875 und 3 639 656). Die Alkyl- oder Alkoxygruppen, die bevorzugt 1 bis 4 C-Atome enthalten, können ihrerseits durch Chlor oder Brom substituiert sein. Geeignete Polyphenylenether leiten sich beispielsweise ab von 2,6-Diethyl-phenol, 2-Methyl-6-ethyl-phenol, 2-Methyl-6-propyl-phenol, 2,6-Dipropyl-phenol, 2-Ethyl-6-propyl-phenol, 2,6-Dichlor-phenol und 2,6-Dibrom-phenol, deren Mischungen untereinander oder mit höher substituierten Phenolen wie z.B. mit 2,3,6-Trimethylphenol. Als Komponente A kann auch ein Gemisch verschiedener Polyphenylenether verwendet werden.

Besonders geeignet ist Poly-2,6-dimethyl-1,4-phenylen-ether. Bevorzugt sind solche Polyphenylenether, die eine Grenzviskosität von 0,3 bis 0,7 dl/g (gemessen in Chloroform bei 25°C) aufweisen.

Komponenten B:

b1: Hierbei handelt es sich um mindestens ein Polymerisat eines monovinylaromatischen Monomeren mit vorzugsweise 8 bis 12 C-Atomen. Als monovinylaromatisches Monomere kommt dabei insbesondere Styrol in Betracht, ferner die kern- oder $C_1$- bis $C_4$-seitenkettenalkylierten Styrole. Vorzugsweise wird Styrol verwendet. Das Zahlenmittel (Mn) des Molekulargewichtes dieser Polymerisate ist vorzugsweise größer 80 000.

Die meist angewandten Verfahren zur Herstellung von Styrolpolymerisaten sind die Polymerisation in Masse oder in Lösung, wie sie beispielsweise in der US-Patentschrift 2 694 692 und in H. Gerrens, Chem.Ing.Tech. 52, 477 (1980) beschrieben sind.

Das bevorzugt eingesetzte schlagfest modifizierte Polystyrol wird im allgemeinen durch Polymerisation von Styrol in Gegenwart eines Kautschuks hergestellt. Dabei wird vorzugsweise ein Kautschukgehalt von 3 bis 25 Gew.-% eingestellt.

Verfahren zur Herstellung solcher Produkte sind dem Fachmann bekannt und entsprechende Produkte sind im Handel erhältlich.

Als Kautschuk bei schlagfest modifiziertem Polystyrol wird natürlicher oder synthetischer Kautschuk eingesetzt. Geeignete Kautschuke sind Naturkautschuk, Polybutadien, Polyisopren und Mischpolymerisate des Butadiens und/oder des Isoprens mit Styrol und anderen Comonomeren, die eine Glastemperatur von unter -20°C besitzen (K.H.Illers, H.Breuer, Kolloidzeitschrift 176, 110 (1961)). Besonders eignen sich Butadienpolymerisate mit einem 1,4-cis-Gehalt, der zwischen 25 und 99 Gew.-% liegt. Es können aber auch Acrylatkautschuke, EPDM-, Polybutylen- und Polyoctenamerkautschuke eingesetzt werden.

Geeignete Polystyrole sind größtenteils handelsüblich, wobei im Falle der schlagfest modifizierten Polystyrole die mittlere Teilchengröße ($d_{50}$-Wert der integralen Massenverteilung) im Bereich von 0,1 bis 8 $\mu$m und bevorzugt im Bereich von 0,3 bis 5 $\mu$m liegt. Die Viskositätszahl der Hartmatrix liegt im Bereich von 35 bis 140 ml/g und bevorzugt im Bereich von 50 bis 130 ml/g (0,5 proz. in Toluol bei 23°C), was Molekulargewichten ($\overline{M}_n$) im Bereich von 60 000 bis 400 000 und bevorzugt von 100 000 bis 350 000 entspricht. Vorzugsweise ist die Komponente b1) selbst bereits eine Mischung aus zwei Polymeren, z.B. einem schlagzäh modifizierten und einem unmodifizierten Polystyrol. Das Mischungsverhältnis in solchen Mischungen ist an sich nicht kritisch und liegt im allgemeinen im Bereich von 20:1 bis 1:20, vorzugsweise 10:1 bis 1:10 und insbesondere 3:1 bis 1:3.

b2: Bei Komponente b2) handelt es sich um ein Polymerisat eines monovinylaromatischen Monomeren mit vorzugsweise 8 bis 12 C-Atomen, das durch anionische Polymerisation mittels Lithiuminitiatoren in enger Molekulargewichtsverteilung herstellbar ist. Derartige Verfahren sind bekannt und z.B. in J.M. Malan et al., Chem. Rev. 69, 693 (1969) beschrieben.

Dabei liegt Mn zwischen 30 000 und 80 000 und der Quotient (Molekulargewichtsverteilungsbreite) aus Gewichtsmittel und Zahlenmittel des Molekulargewichts (Mw/Mn) ist kleiner als 1,2. Als monovinylaromatische Monomere kommen dabei insbesondere Styrol, ferner kern- oder $C_1$- bis $C_4$-seitenkettenalkylierte Styrole oder Mischungen davon in Frage. Bevorzugt wird Styrol verwendet.

Die erfindungsgemäßen Mischungen auf der Basis der Komponenten A und B können zur weiteren Verbesserung ihrer Eigenschaften Zusatzstoffe wie Verstärkungsmaterialien, Antioxidantien, Hitze- und Lichtstabilisatoren, Gleit- und Entformungsmittel, Färbemittel wie Farbstoffe und Pigmente sowie Flammschutzmittel in den üblichen Mengen enthalten.

Bei den Verstärkungsmaterialien handelt es sich üblicherweise um mineralische Verstärkungsmaterialien wie Glaskugeln, Glasfasern, Mineralfasern, Whiskers und Glimmer. Es können davon bis zu 50 Gew.-% und bevorzugt bis zu 30 Gew.-% bezogen auf das Gesamtgewicht der Formmasse eingearbeitet werden.

Die Herstellung der erfindungsgemäßen thermoplastischen Formmassen erfolgt zweckmäßigerweise durch Mischen der Komponenten bei Temperaturen im Bereich von 200 bis 320°C, vorzugsweise bei 250 bis 300°C, in üblichen Mischvorrichtungen wie Knetern, Banbury-Mischern, Ein- und Zweischneckenextrudern. Bevorzugt werden Zweischneckenextruder, da eine intensive Durchmischung vorteilhaft ist. Die Mischzeiten liegen im allgemeinen zwischen 0,5 und 30 Minuten, vorzugsweise zwischen 1 und 5 Minuten. Je nach Bedarf können die Formmassen z.B. zu Granulaten, Pulvern, Preßlingen, Platten oder Bahnen verarbeitet werden. Die Reihenfolge des Mischens der Komponenten kann variiert werden, es können ausgewählte Komponenten vorgemischt werden oder es können alle Komponenten gemeinsam gemischt werden.

Die vorstehend genannten Zuschlagsstoffe können vor oder auch während des Mischens zugesetzt werden.

Die erfindungsgemäßen thermoplastischen Formmassen besitzen aufgrund ihrer guten Fließfähigkeit hervorragende Verarbeitungseigenschaften bei guten mechanischen Eigenschaften und hoher Wärmeformbeständigkeit.

Beispiele

Mischungen von jeweils etwa 4 kg wurden auf einem Zweischneckenextruder der Firma Werner & Pfleiderer, Modell ZSK 30 bei 280°C Gehäusetemperatur hergestellt. Aus den durch Extrusion hergestellten Produkten wurden bei 280°C spritzgegossene Prüfkörper gefertigt und daran folgende Kennzahlen gemessen:
- Schmelzindex (MFI) in (g/10 Min) nach DIN 53 735 bei einer Temperatur von 200°C und 5 kg Belastung.
- Lochkerbschlagzähigkeit (aKL) in $kJ/m^2$ nach DIN 53 753 bei 23°C
- Erweichungstemperatur (Vicat) in (°C) bei einer Belastung von 49,05 N und einem Temperaturgradienten von 50 K/Std. nach DIN 53 460
- E-Modul (Ez) in ($N/mm^2$) nach DIN 53 457
- Reißfestigkeit ($\sigma$R) in ($N/mm^2$) nach DIN 53 455

Die Molekulargewichte wurden mittels Gelpermeationschromatographie (GPC) bestimmt.

Komponente A (Polyphenylenether)

Poly-2,6-dimethyl-1,4-phenylen-ether mit einer Grenzviskosität von 0,50 dl/g (gemessen in Chloroform bei 25°C).

Komponente B (Polystyrol)

| Bezeichnung | Mw | Mn | Mw/Mn |
|---|---|---|---|
| B,b1.1 | 187 000 | 94 000 | 1,99 |
| B,b1.2 | 173 000 | 72 100 | 2,40 |
| B,b2 | 55 100 | 52 000 | 1,06 |

B,b1.2 ist ein schlagzähes Polystyrol mit 8 Gew.-% Polybutadien als Kautschukanteil und einer mittleren Teilchengröße ($d_{50}$) von ca. 2,7 $\mu$m.

| Beispiel Nr. | 1* | 2 | 3 | 4 | 5 | |
|---|---|---|---|---|---|---|
| A | 12,0 | 12,0 | 12,0 | 12,0 | 12,0 | (Gew.-%) |
| B,b1.1 | 59,4 | 49,4 | 39,4 | 29,4 | 19,4 | " |
| B,b1.2 | 28,6 | 28,6 | 28,6 | 28,6 | 28,6 | " |
| B,b2 | - | 10,0 | 20,0 | 30,0 | 40,0 | " |
| MFI | 2,2 | 2,8 | 3,7 | 5,0 | 6,9 | (g/10 Min) |
| Vicat | 106,5 | 106,7 | 106,6 | 106,7 | 106,8 | (°C) |
| aKL | 5,5 | 5,8 | 5,8 | 5,5 | 4,7 | ($kJ/m^2$) |
| Ez | 2855 | 2855 | 2809 | 2767 | 2761 | ($N/mm^2$) |
| $\sigma$R | 53 | 53 | 52 | 50 | 50 | ($N/mm^2$) |

* Vergleichsbeispiel

**Patentansprüche**

1. Thermoplastische Formmassen auf Basis von Polyphenylenethern und Polystyrol, enthaltend als wesentliche Komponenten
   A) 5 bis 95 Gew.-% mindestens eines Polyphenylenethers und
   B) 5 bis 95 Gew.-% einer polymeren Masse bestehend aus
      b1) 50 bis 99 Gew.-% mindestens eines, gegebenenfalls modifizierten, vinylaromatischen Polymerisats und
      b2) 1 bis 50 Gew.-% mindestens eines, gegebenenfalls modifizierten, vinylaromatischen Polymerisats mit einer Molekulargewichtsverteilungsbreite (Mw/Mn) von 1,2 oder kleiner und einem Zahlenmittel des Molekulargewichts (Mn) im Bereich von 30 000 bis 80 000, wobei das Zahlenmittel des Molekulargewichts (Mn) von b1) größer ist als das von b2).

2. Thermoplastische Formmassen nach Anspruch 1, enthaltend mindestens ein schlagzäh modifiziertes Polystyrol in der Komponente B.

3. Verwendung der thermoplastischen Formmassen gemäß den Ansprüchen 1 bis 2 zur Herstellung von Fasern, Folien und Formkörpern.

4. Formkörper, hergestellt aus Formmassen gemäß den Ansprüchen 1 bis 2 als wesentlichen Komponenten.